# EUROPEAN PATENT SPECIFICATION

(11) **EP 1 603 346 B1**
(45) Date of publication and mention of the grant of the patent: **01.10.2008**
(21) Application number: 04006531.0
(22) Date of filing: 18.03.2004
(51) Int. Cl.: H04Q 1/14, H01R 13/658

(54) **Telecommunications module with improved shielding characteristics**
Telekommunikationsmodul mit verbesserten Abschirmeigenschaften
Module de télécommunication avec des caractéristiques de blindage améliorées

(43) Date of publication of application: 07.12.2005
(73) Proprietor: 3M Innovative Properties Company, St. Paul MN 55133-3427 (US)
(72) Inventor: Metral, Guy, 74300 Cluses (FR); Chatellard, Xavier, 74300 Nancy sur Cluses (FR)
(74) Representative: Bergen, Katja

(56) References cited:
- EP-A- 0 766 352
- DE-U- 29 909 786

## Description

### Technical Field

The invention relates to a module in the field of telecommunications, such as a connection module, a disconnection module, a terminal module or any other type of telecommunications module.

### Background

In the field of telecommunications; numerous customers are connected with the switch.of a telecommunications company via telecommunications lines. The customers can be called subscribers. The switch is also called an exchange. Between the subscriber and the switch, sections of the telecommunications lines are connected with telecommunications modules. The telecommunications modules establish an electrical connection between a wire, which is attached to the telecommunications module at a first side,' and another wire, which extends from the telecommunications module at a second side. A telecommunications module can have the shape of a strip, i.e. it can have a substantially elongate shape, at which contacts are exposed so as to allow wires to be connected therewith, that face being referred to hereinafter as the "front" of the module and the opposite face being referred to as the "rear" regardless of the orientation of the module. An example of a telecommunications module to which the invention is applicable, is the connector sold by Pouyet, a subsidiary of Quante 3M Telecommunications, Neuss, Germany, under the designation RCP connector.

In recent years, the transmission rates of telecommunications lines have increased, as now not only voice signals but also data signals are transmitted by the telecommunications lines. The high transmission rates, which have become standard in this field, may lead to crosstalk between adjacent lines. Crosstalk means the phenomena that a telecommunications line acts as a kind of an antenna and "sends" signals to adjacent lines. This may change the signals carried by the "receiving" line, and thus crosstalk is to be prevented as far as possible in telecommunications lines. This also applies to the telecommunications modules comprising contacts, to which telecommunications lines are connected. As the contacts transmit the signals within the telecommunications module, crosstalk should also be avoided.

In this context, US 5,160,273 describes a connector block assembly in which shield plates are arranged between pairs of contacts. The shield plates are connected with each other by a common base rail so as to allow grounding of the shield plates. In this manner, any current, which is induced in the shield plates by the adjacent contact, can be grounded. In the assembly disclosed in the mentioned document; the shield plates are inserted into a rear part of a plastic housing, and a front part of the plastic housing is subsequently joined with the rear part. In view of the described operation for assembling the connector block, problems can arise as all of the shield plates need to be fitted into respective slots simultaneously.

EP 0 766 352 B1 describes a terminal block into which shield plates, which can be connected with each other, can be inserted from the rear thereof. The rear of the block as already indicated, is defined as being the side opposite to that, at which contacts for connecting wires therewith are exposed. Due to the shield plates being connected with each other, close tolerances need to be maintained to allow insertion thereof without problems.

DE-U 299 09 786 describes shield plates which can be inserted into a terminal block from the front thereof and can be locked with further shield components.

Finally, EP 1 133 814 B1 discloses a shielding device comprising plural shield plates which are integrally connected with a common rail. The shielding device, is, as a whole, insertable from the rear of a terminal block. This leads to the requirement of maintaining close tolerances and sufficient mechanical strength in order to avoid problems when the shielding device is inserted.

### Summary of the Invention

The invention provides a telecommunications module which is adapted to receive shielding components which can be produced in a simple manner and can, furthermore, be assembled with the telecommunications module by inexpensive and simple processes.

The telecommunications module has a housing and pairs of contacts exposed at the front of the housing, the pairs of contacts being adapted to connect wires therewith, the housing being provided with at least one slot at a location between two pairs of contacts, the slots having an opening at at least one side of the housing extending between the front and rear of the module so as to allow at least one shield plate and at least a portion of a grounding rail, which is adapted to electrically contact the shield plate, to be inserted into the slot via said opening.

The telecommunications module has, firstly, a housing and contacts exposed at the front of the housing. The housing is usually made of plastic. The exposed contacts are adapted to have wires connected therewith and are typically arranged in pairs with contacts of one pair being adjacent to each other. The contacts can be IDCs (Insulation Displacement Contacts), and they can also be formed as wire-wrap contacts or any other suitable type of contact. As regards the electrical connections in general, the telecommunications module has an incoming side and an outgoing side. The incoming wires are connected with two contact sections of two contacts of one pair, and the outgoing wires are connected with two opposite contact sections of the very same contacts of the same pair. The signal is transmitted by the pair of wires connected to a pair of contacts in cooperation with the pair of contacts as such. The telecommunications module typically has two or more pairs of contacts with eight pairs being currently preferred. In this situation, it is desirable to reduce crosstalk between the pairs of contacts.

To reduce crosstalk, the housing of the telecommunications module is configured to allow the insertion of at least a portion of at least one shield plate between pairs of contacts and/or allow the insertion of at least a portion of a grounding rail adapted to electrically contact shield plates. Thus, in one embodiment, shield plates can be inserted into the housing of the telecommunications module. To connect the shield plates with ground, the shield plates can have a portion exposed at the outside of the housing which is, in the final state, contacted by the grounding rail to connect the shield plates with ground. In a similar manner, only suitable portions of a grounding rail can be inserted into the slots of the housing that are open at at least one side of the housing. In this case, also the shield plates can be inserted into the slots from a side of the housing. However, the shield plates could also be inserted from a front or a rear of the housing. For the function described above the housing is provided with at least one slot at a location between pairs, preferably between every pair of contacts which are present.

In a telecommunications module in accordance with the invention, the/each slot is open at a side of the housing extending between the front and rear of the module. In use, the side, at which the/each slot is open, will usually be the top or bottom side of the housing. As mentioned above, the front is that side at which the contacts are exposed so as to allow the connection of wires therewith. Furthermore, the contacts are usually arranged adjacent each other and aligned in a direction from a first, e.g. a left, end of the module to a second, e.g. a right end. In view of these considerations regarding the general structure of a telecommunications module, the slot thus allows at least one shield plate to be inserted from a side of the module. It should be mentioned that the slot can additionally be open at the front and/or the rear side of the module. The slot typically has a width of a few tenths of a millimeter up to approximately one millimeter. The shield plate can be made of metal or metalized plastic or any other suitable material to shield adjacent contacts against crosstalk.

In addition to the possibility of inserting a shield plate into a particular slot, the slot is, furthermore, adapted to allow at least a portion of a grounding rail also to be inserted into the slot. By the mentioned portion, which is to be inserted into the slot, the grounding rail is adapted to electrically contact one or more shield plates. It is to be mentioned that the telecommunications module is, in its completed state, adapted to receive shield plates and, where applicable, the grounding rail. In other words, the shield plates and/or the grounding rail do not necessarily have to be inserted into the telecommunications module during the manufacture thereof. Thus, the insertion of the shield plates and the grounding rail does not affect the assembling process of different components of the telecommunications module, such as, for example parts of the housing, which cooperate to accommodate the mentioned shield plates and grounding rail. Rather, the telecommunications module can be completed during the production thereof, and the shield plates and grounding rail can be added thereafter. This facilitates the manufacturing process. Furthermore, there is the possibility of providing two different types of telecommunications module on the basis of one standard module. One type can be offered,without the shielding ' components, for example, for applications in which only voice signals are carried, and the second type can be offered with the shield plates and, where applicable, the grounding rail for applications in which both voice and data signals are carried.

In this context, it is considered novel to provide the shield plates and the grounding rail separate from each other and configure the telecommunications module to allow the insertion of both the shield plates and the grounding rail from the same side of the telecommunications module. This is independent from any features or feature combinations described above and below and is one aspect of the present application. In accordance with this aspect of the invention, the shield plates and the grounding rail can not only be insertable from one side of the telecommunications module, but also from the front and the rear thereof by adapting the one or more slots of the telecommunications module accordingly. The telecommunications module has a housing and pairs of contacts exposed at the front of the housing, the pairs of contacts being adapted to connect wires therewith, the housing being provided with at least one slot at a location between two pairs of contacts, the slots being open at the front and/or the rear and/or at least one side of the housing extending between the front and rear of the module so as to allow at least one shield plate and/or at least a portion of a grounding rail, which is adapted to electrically contact the shield plate, to be insertable into the slot from the front or the rear or a side of the housing. In the last mentioned case, both the shield plate and the portions of the grounding rail are inserted from one and the same side.

Furthermore, in the same manner, it is considered novel and a subject matter independent from any other mentioned features, that separate shield plates are insertable into a completely assembled telecommunications module from the side thereof by providing suitable slots. In this case, the grounding rail can be insertable from the same or a different side, as mentioned above. It should additionally be mentioned that for the further aspects of the invention described above any of the features described hereinafter as well as any preferred embodiments as described herein are applicable and considered subject matter of the present disclosure.
Thus, the shield plates are, in the telecommunications module described herein, separate from the grounding rail. This structure not only leads to reliable shielding or screening between contacts to reduce crosstalk, but in addition, the manufacturing process is facilitated by providing the shield plates separate from the grounding rail. Since the shield plates can individually be inserted into the various slots, the distances between the slots do not have to be pre-set, unlike the distances between the shield plates provided on an integral structure including a common grounding rail.
Rather, individual shield plates can be inserted into individual slots in an easy manner. The shield plates are grounded by the grounding rail, particularly those portions thereof, adapted to be inserted into the respective slots of the telecommunications module so as to contact a respective shield plate. As those portions can easily be made sufficiently flexible so as to compensate for variations regarding the above-mentioned distances, a simple and reliable electrical connection for the shielding and grounding purpose is realized.

Due to the shield plates being separate from the grounding rail, production costs can be reduced by standardizing shield components for different products. In particular, the same type of shield plates can be used for telecommunications modules having different distances between the slots provided between contacts. While the shield plates can be standardized, the differences regarding the telecommunications modules can be taken into account by adjusting the grounding rail correspondingly. Furthermore, it has turned out that a grounding rail having relatively short portions, which merely serve to establish electrical contact with the shield plates, is less fragile than an integral structure having a grounding rail and shield plates integrally formed thereon. Furthermore, when both the shield plates and the grounding rail were made of plated bronze material, the process to obtain the plating can be simplified when the shield plates are separate from the grounding rail as described herein. Thus, the production costs can be reduced also in this respect.

The slot provided in the telecommunications module can be open at opposed sides of the module. In this case, the slot can have a shorter extension on one side. In particular, the slot can on one side, i.e. the side with the longer extension, be adapted to allow the insertion of the shield plate. Due to the shorter extension of the slot on the other side, the shield plate is prevented from passing completely through the telecommunications module. Rather, only a suitable portion of the shield plate can extend through the slot at the other side having a shorter extension, so as to allow establishing an electrical connection with further components as described in more detail below.

The housing of the telecommunications module can have an engagement member in the vicinity of the slot so as to engage with a shield plate inserted into the slot. The engagement member serves to prevent the shield plate from moving in a front-rear-direction.

In particular, the engagement member can be formed as an internal projection extending into the slot. This projection can serve to engage with the shield plate inserted into the slot. By such an engagement the position of the shield plate in the housing is defined, as the projection can be shaped to substantially prevent the shield plate from moving in a front-rear-direction. Furthermore, such a projection can be formed continuously so as to extend into plural slots. In this embodiment the housing of the telecommunications module is provided with additional stability. The continuous projection acts as a kind of bridge between the slots and, optionally, openings that are provided for accommodating contacts. As an alternative, it should be mentioned that the engagement member of the housing can also be formed of a recess, an opening or an indentation. In this case, the shield plate can have a projection cooperating with the mentioned structure provided on the housing.
Although the telecommunications module described herein is generally prepared for the insertion of shield components, such as the shield plates and the grounding rail, the telecommunications module does not, in a basic situation, necessarily need to comprise these components. However, the telecommunications module can be prepared so as to be equipped with these components to provide a telecommunications module which is improved as regards its crosstalk properties.

In a telecommunications module having at least one shield plate mounted therein, the at least one shield plate can have an engagement member which is adapted to locate the shield plate in the telecommunications module. For example, the engagement member can be any type of projection, lug or suitable shape of the shield plate and/or the contour thereof which allows a cooperation with a suitable, at least partially complementary structure formed on the telecommunications module.

In particular, the engagement member of the shield plate can be a slit which is formed in a direction in which it is insertable into the slot of the telecommunications module. The slit of the shield plate can cooperate with an internal projection of the telecommunications module as described above to prevent movement of the shield plate in a direction perpendicular to the insertion direction of the shield plate, i.e. the front-rear-direction. In this context, it is to be mentioned that a shield plate having a slit formed in its insertion direction, particularly formed in a side-to-side-direction, as seen in the final telecommunications module, is considered novel and is to be regarded as subject matter of the present application with or without being combined with a telecommunications module. Thus, also a shield plate as such having one or more of the features described above and below is advantageous and provides not only improved crosstalk properties but also a reduction of production costs.

The shield plate can have at least one widened portion at the front thereof. The widened portion can be formed on one or both sides of the shield plate. When the shield plate is inserted into the telecommunications module, the widened portion is adapted to extend from both sides of the housing of the telecommunications module so as to be electrically connectable with further components. Thus, further shielding components and/or grounding wires of wire pairs of telecommunications cables can be connected therewith.

The grounding rail can extend in a plane parallel to a side of the telecommunications module. In particular, the grounding rail can be stamped from sheet metal, and the plane of the sheet metal can be parallel to a side of the module. Thus, the grounding plate can, in the inserted state, be arranged in contact with a side of the housing of the telecommunications module so as to reduce the space needed to accommodate the module. In this context, those portions of the grounding rail, which are adapted to contact the shield plates, can extend at an angle of approximately 90 degrees to the plane of the grounding-rail. In the attached state of the grounding rail, the mentioned portions are inserted into the slots of the telecommunications module so as to contact the shield plates.

Generally, the grounding rail can be adapted to establish electrical connection with a component which is both adapted to mount telecommunications modules thereon and connected to ground. Such a component can, e.g. be constituted by a so-called back mount frame or suitable rails, on which telecommunications modules can be mounted. However, the telecommunications module can also comprise a further grounding component, i.e. a grounding contact, which is, in the attached state, electrically connected with the grounding rail of the telecommunications module. The grounding contact directly or indirectly establishes an electrical connection with a grounded element as mentioned above.

Whereas the telecommunications module described herein can be provided with any suitable number of pairs of contacts, it is currently preferred that the telecommunications module comprises eight pairs of contacts and, correspondingly, seven shield plates, each of which is provided between adjacent pairs of contacts.

The telecommunications module can, furthermore, be combined with a plug, to which a telecommunications cable is connected. The telecommunications cable can be a patch cord so that the plug can in this case be called a patch cord plug. The plug, in any case, comprises a shielding contact, which, when the plug is connected at the front of the module, is in electrical connection with at least one shield plate. Thus, a complete shielding or screening of a telecommunications module can be achieved. In particular, the shielding contact of the plug is in connection with one or more shield plates. The shield plates are electrically connected with the grounding rail which in turn, can directly or indirectly be connected with a grounded element as described above.

### Brief Description of the Drawings

Hereinafter, the invention is described by means of a nonlimiting example thereof with reference to the drawings, in which:
- Fig. 1: shows a perspective view of the telecommunications module;
- Fig. 2: shows a perspective view of shield plates and a grounding rail to be inserted into the telecommunications module of Fig. 1;
- Fig. 3: shows a view from one side of the telecommunications module of Fig. 1 with the shield plates and the grounding rail of Fig. 2 inserted;
- Fig. 4: shows a sectional view of the telecommunications module on line AA of Fig. 3 in combination with a patch cord plug; and
- Fig. 5: shows a view corresponding to that of Fig. 3 of a further embodiment of a telecommunications module.

### Description of the Invention

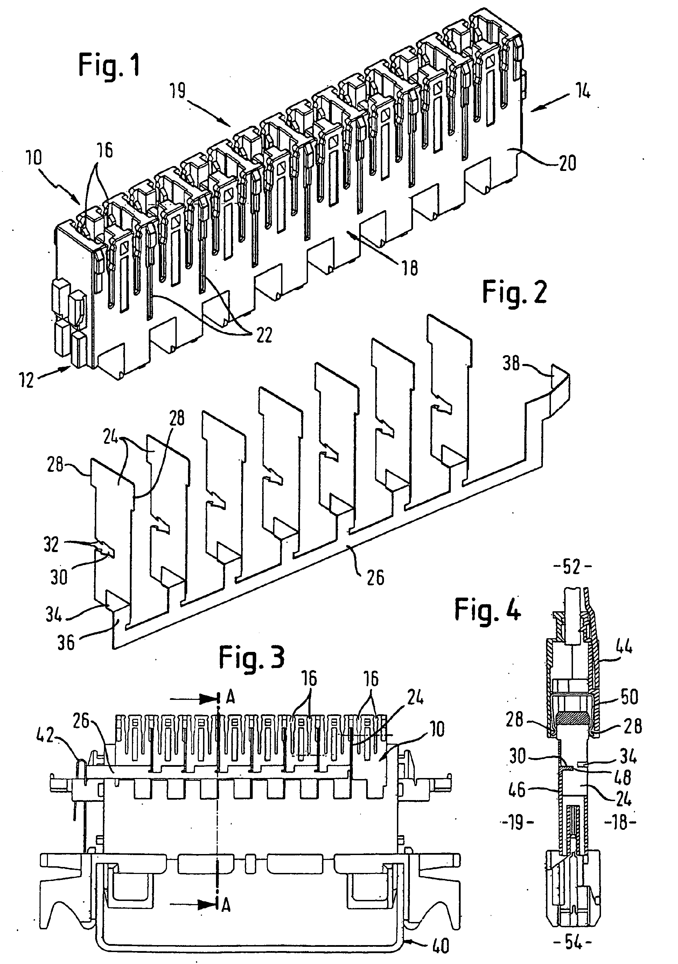

As can be taken from Fig. 1, the telecommunications module 10 has the shape of an elongate strip extending from a first end (shown in Fig. 1 on the left side 12) to a second end (shown in Fig. 1 on the right side 14). The pairs of contacts 16 in the module are exposed at the front in use and reference will be made accordingly hereinafter. Thus, the remaining side, which is visible in Fig. 1, is the top side 18. In the embodiment shown, eight pairs of contacts 16 are exposed.at the front. The housing 20 of the telecommunications module 10 is made of plastic material. For further details of the general structure of the telecommunications module 10 according to the invention, reference may be made to those documents that are acknowledged in the introductory part of the specification.

In order to allow the insertion of shield plates, as described below, between pairs of contacts 16, slots 22 are provided in the housing 20. The slots are shown oriented approximately perpendicular to the sides 18, 19 of the housing but can be arranged at any suitable angle. In the embodiment shown comprising eight pairs of contacts 16, seven slots 22 are provided between the pairs of contacts 16. As can be taken from Fig. 1, the slots are open at the side 18. As will be apparent from Fig. 4 and described in more detail below, the slots 22 are, in addition, preferably also open at the other side 19, which is not visible in Fig. 1. As further details of the telecommunications module 10 shown in Fig. 1 are apparent to those skilled in the related field, a more detailed description of the telecommunications module as such will be omitted. In the context of the invention, the slots 22 provided in the telecommunications module 10 allow the insertion of shield plates as described below. The slots could also be configured so as to allow an insertion of the shield plates from the side 19.

Fig. 2 shows shield plates 24 and a grounding rail 26. The shield plates 24 can be made of thin shield metal or of thin metalized plastic or any other conductive material. Fig. 2 shows the orientation of the assembly of shield plates 24 and the grounding rail 26, in which these components are to be inserted in the telecommunications module shown in Fig. 1.

The same terminology will be employed to refer to various sides of the components shown in Fig. 2 above for the telecommunications module. Thus, the shield plates 24, in the embodiment shown, have an elongate shape extending from the rear to the front. As can be taken from Fig. 2, they preferably furthermore comprise widened portions 28'at the front end thereof. On one side, remote from the rail 26, they preferably comprise a slit 30 which extends approximately over one half, or somewhat further, than the width of the shield plates 24. As the shield plates 24 are to be inserted into the housing 20 of the telecommunications module 10 in a direction from one side 18 to the other side 19, the slits 30 extend in the insertion direction. An internal projection of the telecommunications module, as described below, can be accommodated in the slit 30 during the inserting movement. Thus, movement of the shield plates in a direction from the front to the rear of the module and vice versa can substantially be prevented. As can be taken from Fig. 2, those edges, which define the slit 30, can define an arrow-like contour with barbs 32 so as to achieve a solid engagement with the internal structure of the module. In particular, this contour can be formed to provide a kind of snapping mechanism cooperating with the internal projection of the module, which is described below in more detail with reference to Fig. 4. It is to be noted that the above-described structure including the slit 30 and the internal projection shown in Fig. 4 are preferred features only. In particular, the above-mentioned alternatives, such as a projection being formed on the shield plates can also be employed.

In the embodiment shown, the grounding rail 26 is made of sheet metal and will usually be stamped from sheet metal.
The plane of the sheet metal extends perpendicular to the plane of the sheet plates 24 and parallel to the sides 18, 19 of the telecommunications module 10. To establish electrical contact with each of the shield plates 24, lugs 34 are bent from the grounding rail 26. These lugs 34 are adapted to be inserted into the slots 22 of the telecommunications module 10 in addition to the shield plates 24 to establish electrical contact with the shield plates 24. As regards the width of the slots 22, this width substantially corresponds to the thickness of each of the shield plates 24 (plus if necessary the thickness of each of the lugs 34 of the grounding rail 26). Advantageously, the width of the slots can be somewhat smaller so that the shield plate 24 and the lug 34 are somewhat compressed in order to secure electrical contact between them. The lugs 34 are each integrally connected with a web 36, which webs 36 are in turn integrally formed with the grounding rail 26. At at least one end thereof, the grounding rail 26 is provided with a suitable structure including a grounding lug 38 to directly or indirectly establish electrical connection with a grounded component. The lugs 34 and the grounding lug 38 merely need to touch or contact the shield plates 24 and the grounded component, respectively, to allow induced current to be guided to ground.

In Fig. 3, the grounded component is a so-called back mount frame 40 which is an elongate structure with an essentially trough-like cross-section, as seen in Fig. 3, to which plural telecommunications modules can be mounted. The contact between grounding rail 26 and the back mount frame 40 is in this case established a grounding contact 42. In the embodiment of Fig. 3 a grounding rail is used, which is substantially a mirror image of the grounding rail as shown in Fig. 2. Thus, the grounding lug 38 is present at a left side thereof and is in electrical connection with the grounding contact 42. In summary, any current induced in the shield plates 24 due to the transmission of signals with a high data rate, is connected with the ground by the grounding rail 26, the grounding contact 42 and the grounded back mount frame 40. Fig. 3 additionally shows the shield plates 24 inserted between each adjacent pairs of contacts 16.

Details of the state, in which the shield plates 24 are inserted into the housing 20 of the telecommunications module 10 are shown in the sectional view of Fig. 4. As regards the telecommunications module, the sectional view is taken at line A-A of Fig. 3. However, a patch cord plug 44 is additionally attached to the front of the telecommunications module 10. As can be taken from the center part of Fig. 4, the slot 22 for inserting the shield plate 24 is open throughout the dimension of the shield plate 24 at the side only, i.e. the right side of Fig. 4. At the opposite side 19, the housing 20 overlaps the shield plate 24 at portion 46. Thus, the shield plate 24 cannot be inserted from the side 18 so as to completely pass through the housing 20 of the telecommunications module 10. Rather, the insertion movement is stopped by portion 46. In addition, at a position corresponding to the slit 30 of the shield plate 24, the housing comprises an internal projection 48, which engages with the slit 30 and substantially prevents the shield plate 24 from moving towards the front 52, or the rear 54 of the module. At the side of the shield plate 24, corresponding to the side 18 of the module i.e. the right side of Fig. 4, a lug 34 of the grounding rail 26 is visible.

Fig. 4, furthermore, shows the effect of widened portions 28 provided at the front end of each of the elongate shield plates 24. These widened portions 28 extend from one side of the housing 20 of the telecommunications module to the other so as to be exposed to the outside. With this configuration, the widened portions 28 can be contacted by a shield contact 50 of the plug 44. Thus, continuous shielding and, furthermore, grounding can be provided by the combination of shield contact 50 of the plug 44, shield plates 24, grounding rail 26 and grounding contact 42.

It should finally be mentioned that the telecommunications module according to the invention can be formed as a terminal or connection module for permanently connecting wires which are terminated at the contacts of the module. Furthermore, the telecommunications module can be formed as a disconnection module, the contacts of which comprise a disconnection or separation point in order to realize an disconnectable connection. As will be apparent to those skilled in the art, any further types of telecommunications module are conceivable for applying the invention as described herein.

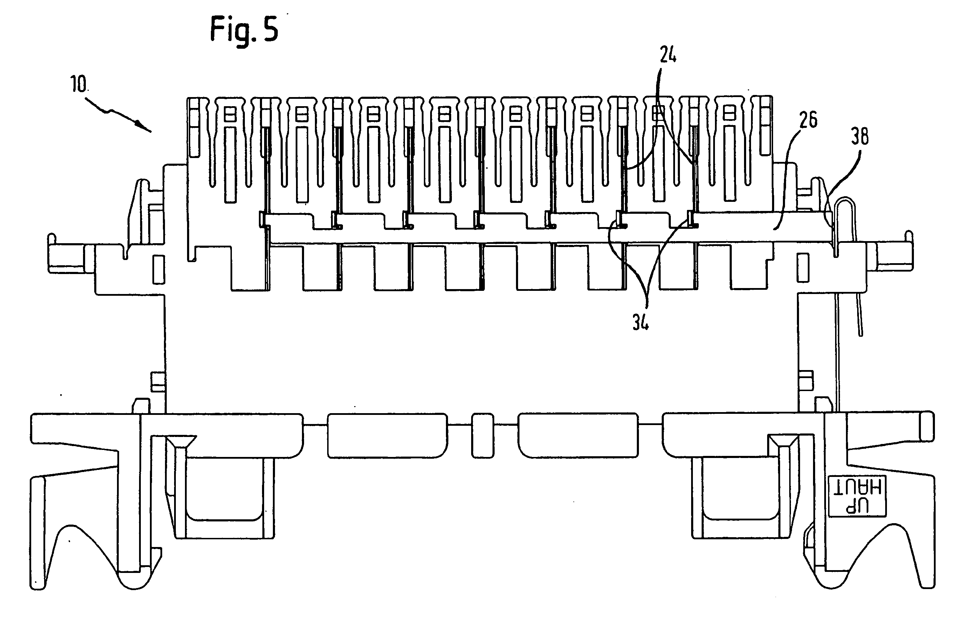

Fig. 5 shows a further embodiment of a telecommunications module 10, the general structure of which essentially corresponds to the embodiment described above. However, the grounding rail 26 is formed somewhat different than in the previous embodiments. In particular, the grounding lug 38 extends to the right as shown for a similar embodiment in Fig. 2. However, the specific structure of those lugs 34, which are integrally formed with the grounding rail 26 and contact the shield plates'24, corresponds to that shown for the embodiment of Fig. 3. It should be mentioned that the grounding rail 26 can also have two or even more grounding lugs 38, for example, one extending to the right, as shown in Fig. 5, and another one extending to the left, as shown in Fig. 3. Furthermore, any of the above-mentioned preferred features can be combined with each other' in order to define novel and advantageous feature combinations. In particular, numerous modifications will be apparent in view of the appended claims.

## Claims

1. A telecommunications module (10) having a housing (20) and pairs of contacts (16) exposed at the front of the housing (20), the pairs of contacts (16) being adapted to connect wires therewith, the housing (20) being provided with at least one slot (22) at a location between two pairs of contacts (16), the slots (22) having an opening at at least one side (18) of the housing (20) extending between the front and rear of the module so as to allow at least a portion of at least one shield plate (24) and at least a portion (34) of a grounding rail (26), which is adapted to electrically contact the shield plate (24), to be inserted into the slot (22) via said opening.

2. The telecommunications module in accordance with claim 1, wherein the slot (22) is open at opposed sides (18, 19) of the module, the slot (22) having a shorter extension on one of the sides (18, 19).

3. The telecommunications module in accordance with claim 1 or 2, wherein the housing (20) has at least one engagement member (48) in the vicinity of the slot (22) so as to engage with a shield plate (24) inserted into the slot (22).

4. The telecommunications module in accordance with claim 3 wherein the engagement member is an internal projection (48) extending into the slot (22).

5. The telecommunications module in accordance with any one of the preceding claims, further comprising at least one shield plate (24) and at least one grounding rail (26).

6. The telecommunications module in accordance with claim 5, wherein the shield plate (24) has an engagement member (30) adapted to position the shield plate (24) in the slot (22).

7. The telecommunications module in accordance with claim 6, wherein the engagement member is a slit (30) formed in the direction of insertion of the shield plate (24) into the slot (22) of the telecommunications module (10).

8. The telecommunications module in accordance with any one of claims 5 to 7, wherein the shield plate (24) has at least one widened portion (28) at a front thereof.

9. The telecommunications module in accordance with any one of claims 5 to 8, wherein the grounding rail (26) extends in a plane parallel to one of the said sides (18, 19) of the telecommunications module (10), the portions (34) contacting the shield plates (24) extending at an angle of approximately 90 degrees to the plane of the grounding rail (26).

10. The telecommunications module in accordance with any one of claims 5 to 9, further comprising a grounding contact (42) electrically connected with the grounding rail (26).

11. The telecommunications module in accordance with any one of claims 5 to 10, wherein the telecommunications module (10) comprises eight pairs of contacts (16) and seven shield plates (24).

12. The telecommunications module in accordance with any on of claims 5 to 11 in combination with a plug (44), which is connected with a cable and comprises a shield contact (50), the shield contact (50) being electrically connected with at least one shield plate (24), when the plug (44) is attached at the front of the telecommunications module (10).

## Patentansprüche

1. Telekommunikationsmodul (10) mit einem Gehäuse (20) und Kontaktpaaren (16), die an der Vorderseite des Gehäuses (20) freiliegen, wobei die Kontaktpaare (16) so konfiguriert sind, dass Drähte mit ihnen verbunden werden können, wobei das Gehäuse (20) an einer Stelle zwischen zwei Kontaktpaaren (16) mit mindestens einem Schlitz (22) versehen ist, wobei die Schlitze (22) auf mindestens einer Seite (18) des Gehäuses (20) eine Öffnung aufweisen, die sich dergestalt zwischen der Vorderseite und der Rückseite des Moduls erstreckt, dass mindestens ein Abschnitt mindestens einer Abschirmplatte (24) und mindestens ein Abschnitt (34) einer Erdungsschiene (26), der dafür konfiguriert ist, einen elektrischen Kontakt mit der Abschirmplatte (24) herzustellen, durch die Öffnung hindurch in den Schlitz (22) eingeführt werden können.

2. Telekommunikationsmodul nach Anspruch 1, wobei der Schlitz (22) an gegenüberliegenden Seiten (18, 19) des Moduls offen ist, wobei sich der Schlitz (22) auf einer der Seiten (18, 19) über eine kürzere Distanz erstreckt.

3. Telekommunikationsmodul nach Anspruch 1 oder 2, wobei das Gehäuse (20) mindestens ein Eingriffselement (48) in der Nähe des Schlitzes (22) aufweist, um eine in den Schlitz (22) eingeführte Abschirmplatte (24) in Eingriff zu nehmen.

4. Telekommunikationsmodul nach Anspruch 3, wobei das Eingriffselement ein innenliegender Vorsprung (48) ist, der sich in den Schlitz (22) hinein erstreckt.

5. Telekommunikationsmodul nach einem der vorangehenden Ansprüche, das ferner mindestens eine Abschirmplatte (24) und mindestens eine Erdungsschiene (26) aufweist.

6. Telekommunikationsmodul nach Anspruch 5, wobei die Abschirmplatte (24) ein Eingriffselement (30) aufweist, das dafür konfiguriert ist, die Abschirmplatte (24) in dem Schlitz (22) zu positionieren.

7. Telekommunikationsmodul nach Anspruch 6, wobei das Eingriffselement ein Schlitz (30) ist, der in der Richtung ausgebildet ist, in der die Abschirmplatte (24) in den Schlitz (22) des Telekommunikationsmoduls (10) eingeführt wird.

8. Telekommunikationsmodul nach einem der Ansprüche 5 bis 7, wobei die Abschirmplatte (24) mindestens einen aufgeweiteten Abschnitt (28) an ihrer Vorderseite aufweist.

9. Telekommunikationsmodul nach einem der Ansprüche 5 bis 8, wobei sich die Erdungsschiene (26) in einer Ebene erstreckt, die parallel zu einer der Seiten (18, 19) des Telekommunikationsmoduls (10) verläuft, wobei sich die Abschnitte (34), welche die Abschirmplatten (24) berühren, in einem Winkel von ungefähr 90 Grad zu der Ebene der Erdungsschiene (26) erstrecken.

10. Telekommunikationsmodul nach einem der Ansprüche 5 bis 9, das ferner einen Erdungskontakt (42) aufweist, der elektrisch mit der Erdungsschiene (26) verbunden ist.

11. Telekommunikationsmodul nach einem der Ansprüche 5 bis 10, wobei das Telekommunikationsmodul (10) acht Kontaktpaare (16) und sieben Abschirmplatten (24) aufweist.

12. Telekommunikationsmodul nach einem der Ansprüche 5 bis 11 in Kombination mit einem Stecker (44), der mit einem Kabel verbunden ist und einen Abschirmkontakt (50) aufweist, wobei der Abschirmkontakt (50) elektrisch mit mindestens einer Abschirmplatte (24) verbunden ist, wenn der Stecker (44) an der Vorderseite des Telekommunikationsmoduls (10) angebracht ist.

## Revendications

1. Module (10) de télécommunications doté d'un boîtier (20) et de paires de contacts (16) exposés à l'avant du boîtier (20), les paires de contacts (16) étant prévues pour y raccorder des fils, le boîtier (20) étant pourvu d'au moins une fente (22) à un emplacement situé entre deux paires de contacts (16), les fentes (22) présentant une ouverture sur au moins un côté (18) du boîtier (20) s'étendant entre l'avant et l'arrière du module de façon à permettre à au moins une partie d'au moins une plaque (24) de blindage et à au moins une partie (34) d'un rail (26) de mise à la terre, prévue pour entrer en contact électrique avec la plaque (24) de blindage, d'être insérées dans la fente (22) par ladite ouverture.

2. Module de télécommunications selon la revendication 1, la fente (22) étant ouverte sur des côtés opposés (18, 19) du module, la fente (22) présentant une étendue plus courte sur un des côtés (18, 19).

3. Module de télécommunications selon la revendication 1 ou 2, le boîtier (20) étant doté d'au moins un élément (48) d'enclenchement au voisinage de la fente (22) de façon à s'enclencher avec une plaque (24) de blindage insérée dans la fente (22).

4. Module de télécommunications selon la revendication 3, l'élément d'enclenchement étant une protubérance interne (48) s'étendant jusque dans la fente (22).

5. Module de télécommunications selon l'une quelconque des revendications précédentes, comportant en outre au moins une plaque (24) de blindage et au moins un rail (26) de mise à la terre.

6. Module de télécommunications selon la revendication 5, la plaque (24) de blindage étant dotée d'un élément (30) d'enclenchement prévu pour positionner la plaque (24) de blindage dans la fente (22).

7. Module de télécommunications selon la revendication 6, l'élément d'enclenchement étant une encoche (30) formée dans la direction d'insertion de la plaque (24) de blindage dans la fente (22) du module (10) de télécommunications.

8. Module de télécommunications selon l'une quelconque des revendications 5 à 7, la plaque (24) de blindage présentant au moins une partie élargie (28) à l'avant de celle-ci.

9. Module de télécommunications selon l'une quelconque des revendications 5 à 8, le rail (26) de mise à la terre s'étendant dans un plan parallèle à l'un desdits côtés (18, 19) du module (10) de télécommunications, les parties (34) en contact avec les plaques (24) de blindage s'étendant suivant un angle d'environ 90 degrés par rapport au plan du rail (26) de mise à la terre.

10. Module de télécommunications selon l'une quelconque des revendications 5 à 9, comportant en outre un contact (42) de mise à la terre relié électriquement au rail (26) de mise à la terre.

11. Module de télécommunications selon l'une quelconque des revendications 5 à 10, le module (10) de télécommunications comportant huit paires de contacts (16) et sept plaques (24) de blindage.

12. Module de télécommunications selon l'une quelconque des revendications 5 à 11 en combinaison avec une fiche (44) reliée à un câble et comportant un contact (50) de blindage, le contact (50) de blindage étant relié électriquement à au moins une plaque (24) de blindage lorsque la fiche (44) est fixée à l'avant du module (10) de télécommunications.
